# EUROPEAN PATENT SPECIFICATION

(11) **EP 3 185 662 B1**
(45) Date of publication and mention of the grant of the patent: **26.04.2023**
(21) Application number: 16199784.6
(22) Date of filing: 21.11.2016
(51) Int. Cl.: H05K 7/14, G08C 17/00, H04B 1/38, H04Q 9/00

(54) **COMMUNICATION DEVICE**
KOMMUNIKATIONSVORRICHTUNG
DISPOSITIF DE COMMUNICATION

(30) Priority: 20.11.2015 SE 1551508
(43) Date of publication of application: 28.06.2017
(73) Proprietor: HMS Industrial Networks AB, 300 04 Halmstad (SE)
(72) Inventor: PALMHAGER, Jörgen, 302 40 Halmstad (SE); ANDERSSON, Rickard, 300 04 Halmstad (SE); ERIKSSON, Bengt, 300 04 Halmstad (SE); SELANDER, Niklas, 300 04 Halmstad (SE); DUNEMARK, Lars, 300 04 Halmstad (SE)
(74) Representative: AWA Sweden AB

(56) References cited:
- US-A- 6 111 519

## Description

### Technical field

The present invention generally relates to a communication system. More specifically, the present invention relates to a communication system comprising a communication device for protocol conversion.

### Background of the invention

In modern industry the demands on communication between devices, units, components, etc. are ever increasing. For example, an electric device such as a pump motor may need to receive control signals from a central control room; a flow meter arranged at the same pump motor may at the same time be required to provide the central control room with the actual value of the flow in a fluid pumped by the pump motor. Fieldbus networks or industrial Ethernet networks are often used in the industry for enabling an efficient communication between different devices in a system, and various types of fieldbus and industrial Ethernet standards have been developed by different companies and organizations. There are basic fieldbus protocols which may be primarily designed for an on/off interface used for e.g. valves, proximity sensors, and limit switches. More complex fieldbus protocols may offer handling of large amounts of data, e.g. when a computer (e.g. in a electric device) communicates with a PLC (Programmable Logic Controller). Examples of fieldbuses of different complexity used today are PROFIBUS, PROFINET, DeviceNet, EtherNet/IP, Modbus TCP and EtherCAT.

However, it is desirable that modules provided for communication between different devices in a system not only enable an efficient communication, but also meet requirements related to robustness, industry standards, etc. Hence, the development of communication modules for these purposes continues. Particularly, it is of interest to provide communication modules which are conveniently constructed, robust and/or able to fulfill industry standards and/or requirements.

US6111519A shows a utility meter transmitter assembly for subsurface installations. The assembly houses electronics for remote reading of meter reading data in a subsurface enclosure, wherein the assembly includes a first inner enclosure of metal for housing the receiver/transmitter circuitry, a second inner enclosure for housing a battery and an outer enclosure of plastic which encloses both of the inner enclosures and additionally provides a sealed compartment for an antenna.

### Summary of the invention

It is an object of the present invention to provide a conveniently constructed device which provides protocol conversion while being robust and/or fulfilling one or more industry standards and/or requirements. This and other objects are achieved by providing a communication system and a method having the features defined in the independent claims. Preferred embodiments are defined in the dependent claims.

Hence, according to a first aspect of the present invention, there is provided a communication system as defined in claim 1, comprising a cabinet, at least one first electronic unit communicable via a first communication protocol and arranged within said cabinet, and at least one second electronic unit communicable via a second communication protocol and arranged outside said cabinet. The communication system further comprises a communication unit. The communication unit comprises a carrier substrate and at least one transceiver comprising at least one antenna, wherein the at least one transceiver is arranged on the carrier substrate. The communication unit further comprises at least one converter arranged to convert between different communication protocols. The communication unit is configured to establish a connection between the communication unit and at least one first electronic unit, and between said communication unit and at least one second electronic unit via said at least one transceiver, respectively. The communication unit, based on the connection, is further configured to establish a communication between at least one first electronic communicable via a first communication protocol and at least one second electronic unit communicable via a second communication protocol via the at least one converter. The communication device is configured for arrangement at least partially within a wall of the cabinet, and wherein at least one of said at least one transceiver is configured to protrude from the wall into the exterior of the cabinet for establishing a connection with said at least one second electronic unit arranged outside said cabinet.

The communication device further comprises a housing arranged to at least partially accommodate the communication unit, and a cap attached to the housing with the aid of a tool and arranged to at least partially cover the housing protruding from the wall into the exterior of the cabinet, whereby the cap contributes to the tamper resistance as well as the anti-theft protection of the communication device. The housing and the cap comprise reciprocal snap connection elements in the form of at least one annual groove and at least one annual flange configured to project into said at least one annual groove.

According to a second aspect of the present invention, there is provided a method for establishing a communication between electronic units communicable via different communication protocols. The method comprises providing at least one first electronic unit communicable via a first communication protocol and at least one second electronic unit communicable via a second communication protocol. The method further comprises providing a communication system according to the first aspect of the present invention. The method further comprises establishing a connection between the communication unit and the at least one first electronic unit and between the communication unit and the at least one second electronic unit, respectively. The method further comprises establishing a communication between the at least one first electronic unit and the at least one second electronic unit based on the connection.

Thus, the present invention is based on the idea of providing a communication device which comprises one or more transceivers, antennas and converters for establishing a connection and communication between first and second electronic units. As the transceiver(s), antenna(s) and converter(s) is (are) integrated in the same communication unit of the communication device, the present invention provides a compact, convenient and robust communication device for communication protocol conversion.

It will be appreciated that the housing of the communication device provides protection for the communication unit, and the cap may provide protection to the housing and/or communication unit. The cap may at least partially protect the housing and/or communication unit from damage, wind, weather (e.g. sun, snow and/or debris), etc. Furthermore, it will be appreciated that the snap connection of the housing and the cap results in that the cap may be rotated on the housing, as the flange of the cap may rotate in the groove of the housing (or vice versa). The communication device is hereby efficiently protected, in particular in that it becomes even more tamper resistant. For example, the construction makes it even harder for a person to unscrew and/or remove the communication unit or communication device (i.e. a fraudulent person may try to remove the communication unit or communication device) once it is mounted. Hence, the present invention contributes to the tamper resistance as well as the anti-theft protection of the communication device. It should also be noted that the alignment and/or position of the carrier substrate and/or antenna may remain unaffected even if subjected to damage (such as someone trying to unscrew the cap), and the operation of the communication unit may be maintained.

The present invention is further advantageous in that in that the cap of the communication device may be easily, quickly and conveniently attached to the housing of the communication device. For example, the cap may be attached to the housing by a simple push. Alternatively, in case the housing comprises one or more annual grooves and the cap comprises a correspondent number of annual flanges configured to project into the grooves, the cap may be conveniently attached to the housing with the aid of a tool.

Another advantage of the present invention is that the cap is removably attached such that the cap may be replaced if necessary and/or desired. For example, if the cap is damaged or has been exposed to the environment (e.g. UV-light), it may be replaced. Furthermore, caps of different materials and/or different shapes may be used in different environments to improve the operation, performance and/or service life of the cap, housing and/or communication device. Another advantage of the embodiment of the present invention is that the snap connection is relatively strong, such that the cap may remain attached to the housing even in the case of damage and/or severe weather conditions.

The communication unit of the communication device comprises a carrier substrate. By the term "carrier substrate" it is here meant substantially any substrate on which one or more components may be mounted. For example, the carrier substrate may be a printed circuit board (PCB). The communication unit comprises at least one transceiver comprising at least one antenna, wherein the transceiver(s) is (are) arranged on the carrier substrate. Hence, at least one antenna of the transceiver(s) is arranged on the carrier substrate. The communication unit further comprises at least one converter arranged to convert between different communication protocols. By the term "converter", it is here meant substantially any unit, device and/or element capable of converting between different communication protocols, i.e. translating data between different network protocols. By "communication formats", it is here meant substantially any format for communication, such as one or more protocols (Ethernet, CAN, RS485, etc.), wired or wireless (3G, WLAN, Bluetooth, etc.) connections, etc. For example, the converter may be configured to convert between a wired communication to a wireless communication, and vice versa, as well as between different communication protocols. It will be appreciated that the converter also may be configured to convert between a wired, first protocol communication format to a wireless, second protocol communication format, or vice versa.

The communication unit is configured to establish a connection between the communication unit and at least one first electronic, and between the communication unit and at least one second electronic unit via the at least one transceiver, respectively. Hence, the communication unit may be interconnected between one or more (first) electronic units and one or more (second) electronic units, and at least partially via the transceiver(s) establish a connection between the communication unit and the first electronic unit(s). By the term "at least partially via the at least one transceiver", it is here meant that there may be a wired connection between the first electronic unit(s) and the communication unit or a wired connection between the second electronic unit(s) and the communication unit.

Based on the above-mentioned connection between (first and second) electronic unit(s), the communication unit is further configured to establish a communication between first electronic unit(s) communicable via a first communication protocol and second electronic unit(s) communicable via a second communication protocol via the at least one converter. By the terms "first electronic unit(s) communicable via a first communication protocol" and "second electronic unit(s) communicable via a second communication protocol", it is here meant communication protocols associated with the respective electronic units. It will be appreciated that the first protocol is different from the second protocol, and that the first electronic unit(s) is (are) different from the second electronic unit(s).

By the term "communicable via a first format" and "communicable via a second format", it is here meant that the first and second electronic units are able to receive and/or transmit data via (by means of) a first and a second communication format, respectively. In other words, the first and second communication formats are associated with the first and second electronic units, respectively. It will be appreciated that the first communication format is different from the second communication format.

The communication device further comprises a housing arranged to at least partially accommodate the communication unit. The communication unit may further comprise a cap attached to the housing and arranged to at least partially cover the housing. The housing and the cap may comprise reciprocal snap connection elements in the form of at least one annual groove and at least one annual flange configured to project into the at least one annual groove.

According to an embodiment of the present invention, the at least one converter is arranged to convert between wired and wireless communications, and wherein the communication unit, based on the connection, is further configured to establish a communication between at least one first electronic unit communicable via at least one wired connection and at least one second electronic unit communicable via at least one wireless connection via said at least one converter.

According to an embodiment of the present invention, the communication device may further comprise at least one electrical interface. The communication unit is configured to establish a connection between the communication unit and at least one first electronic unit via the at least one electrical interface, and between the communication unit and at least one second electronic unit via said at least one transceiver, respectively. Hence, the communication unit may be connected to one or more (first) electronic units via the electrical interface(s), and establish a connection between the communication unit and the electronic unit(s). By the term "electrical interface", it is here meant substantially any interface for electrical connection. Furthermore, the interface(s) may be wireless or wired.

According to an embodiment of the present invention, the carrier substrate may be arranged in parallel with a longitudinal axis of the communication unit, and the at least one antenna may be arranged on an end portion of said carrier substrate. In other words, the carrier substrate may be arranged in a standing (upright) position or orientation within the communication unit. Furthermore, the at least one antenna may be arranged on an upper (distal, end) portion of the carrier substrate. The embodiment of the present invention is advantageous in that it may minimize deteriorating effects on the transmission pattern of the communication unit. For example, if the communication unit is at least partly arranged within a cabinet, the antenna(s) of the transceiver(s) may protrude from the wall of the cabinet. By the term "wall", it is here meant any side wall or roof/ceiling of the cabinet. As the cabinet material is generally metal, the arrangement of the transceiver antenna(s) according to the embodiment mitigates an impaired transmission pattern of the antenna(s).

According to an embodiment of the present invention, the carrier substrate may be attached to the housing via at least one resilient element. The embodiment of the present invention is advantageous in that the resilient element increases the protection of the carrier substrate. For example, if the communication unit is subjected to damage (by mistake or on purpose), the resilient element (e.g. rubber element) may at least partially absorb shocks and/or impacts.

According to an embodiment of the present invention, the cap may be configured to provide an air gap between the cap and the housing. The embodiment of the present invention is advantageous in that the air gap provides an isolating effect between the housing and the cap, which even further contributes to the operation, performance and/or service life of the communication unit. The air gap hereby contributes to the protection of the communication unit when subjected to environmental influences such as high/low temperatures, humidity, etc.

According to an embodiment of the present invention, the communication unit may further comprise at least one sensor arranged in the housing, wherein the sensor is configured to detect damage to the housing. The embodiment of the present invention is advantageous in that an operator of the communication device may be alerted by the sensor that the housing and/or communication device has been damaged and needs to be repaired and/or replaced.

According to an embodiment of the present invention, the at least one sensor may be a light-sensitive sensor comprising at least one photo-diode. The embodiment of the present invention is advantageous in that the sensor may detect damage to the housing due to light penetrating into the (broken) housing. In other words, sunlight and/or artificial light may reach the light-sensitive sensor in case of a broken housing and/or a housing defect. An operator of the communication device may preferably be informed of the damaged housing detected by the sensor.

According to the present invention, the communication device may be configured for arrangement at least partially within a wall of a cabinet, and wherein at least one of said at least one transceiver is configured to protrude from the wall into the exterior of the cabinet. In other words, the communication device may be configured, arranged and/or adapted for arrangement in a hole, cavity, or the like, of a wall of a cabinet, housing or enclosure. After mounting the communication device in the cabinet wall, the transceiver and/or antenna is (are) arranged to protrude (project) from the plane of the wall. The embodiment of the present invention is advantageous in that the communication unit may hereby mitigate (or at least partially prevent) an influence of the cabinet wall on the antenna field and/or directivity.

According to an embodiment of the present invention, the cap may comprise at least one resilient seal member configured to provide a sealing between the cap and the cabinet. The embodiment of the present invention is advantageous in that the resilient seal member may provide a sealing between the communication device and/or communication unit and a wall of a cabinet in case the communication device is arranged at least partially within a wall of the cabinet. The embodiment may hereby fulfill one or more industry standards and/or requirements regarding the seal of the communication device and/or communication unit from the outside environment. For example, the seal may fulfill the so called IP 65 sealing standard.

According to the present invention, there is provided a communication system. The communication system may comprise a cabinet, at least one first electronic unit communicable via a first protocol arranged within the cabinet and at least one second electronic unit communicable via a second protocol arranged outside the cabinet. The communication system may furthermore comprise at least one communication device according to one of the previously disclosed embodiments, wherein at least one of the at least one transceiver is configured to protrude from the wall into the exterior of the cabinet for establishing a connection with the at least one second electronic unit arranged outside the cabinet. The communication system of the present invention is advantageous in that the communication system may provide a convenient communication between electronic units, separated by the cabinet, and which are communicable via different communication protocols. Another advantage is that the arrangement of the communication device in the cabinet wall such that the transceiver and/or antenna protrudes (projects) from the plane of the cabinet wall mitigates an influence of the wall on the antenna field and/or directivity. This effect is even further substantiated if the antenna is arranged on a (upper) end portion of the carrier substrate of the communication unit, according to a previously described embodiment. For further advantages of the present embodiment, it is referred to the sections of the embodiments of the communication unit and/or communication device.

According to an embodiment of the present invention, the communication system may further comprise a hole in a wall of the cabinet, wherein the hole is configured to receive the communication device in a unique orientation of the communication device. By the term "unique orientation", it is here meant that the hole provides a unique form fit of the communication device in the hole, such that the communication device may be arranged in the hole in one orientation and/or position only. For example, the hole may be provided with a tap and/or a cut to ensure a unique orientation of the communication device comprising one or more taps and/or cuts corresponding to those provided in the hole. The embodiment of the present invention is advantageous in that the antenna of the communication unit may be provided in a predetermined orientation, such that the transmission pattern and/or directivity of the antenna is optimized.

According to an embodiment of the present invention, there is provided a method according to the second aspect of the present invention, further comprising the steps of providing a cabinet, arranging at least one first electronic unit communicable via a first communication protocol within the cabinet, and arranging at least one second electronic unit communicable via a second communication protocol outside the cabinet. The method further comprises arranging a communication device according to one of the previously described embodiments at least partially within a wall of the cabinet such that at least one of the at least one transceiver is configured to protrude from the wall into the exterior of the cabinet.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief description of the drawings

The above, as well as additional objects, features and advantages of the present invention, will be better understood through the following illustrative and non-limiting detailed description of preferred embodiments of the present invention, with reference to the appended drawings, where the same reference numerals will be used for similar elements, wherein:
Figs. 1-2 diagrammatically illustrate a communication device according to embodiments of the present invention; and
Fig. 3 diagrammatically illustrates a communication system according to an embodiment of the present invention.

### Detailed description of preferred embodiments

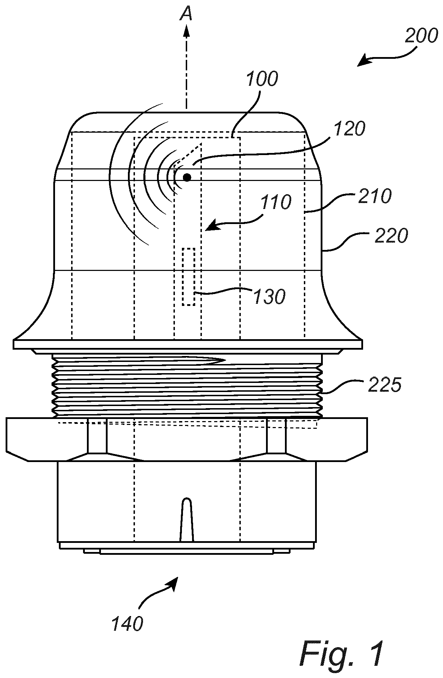

Fig. 1 diagrammatically illustrates a communication device 200 comprising a communication unit 100 (schematically indicated by dashed lines) according to an embodiment of the present invention. The communication unit 100 comprises a carrier substrate 110, e.g. a printed circuit board (PCB). The carrier substrate 110 is arranged in parallel with a longitudinal axis A of the communication unit 100, i.e. the carrier substrate 110 is arranged in a standing (upright) position within the communication unit 100. The communication unit 100 further comprises at least one transceiver 120 for transmitting and receiving signals, comprising at least one antenna. The transceiver 120 and/or antenna is arranged on an (upper) end portion of the carrier substrate 110. The communication unit 100 further comprises at least one converter 130 (schematically indicated) which is arranged or configured to convert between different communication protocols. An electrical interface 140 is provided at a bottom end portion of the communication unit 100. It will be appreciated that the relatively large diameter of the communication unit 100 of the present invention allows the electrical interface(s) 140 to be standardized. For example, the electrical interfaces(s) 140 may comprise one or more so called D-subminiature connectors (D-sub), and relatively small contacts, which consequently may be expensive and/or complex, may be avoided.

The communication unit 100 is configured to establish a connection between the communication unit 100 and at least one first electronic unit (not shown), e.g. via the electrical interface 140, and between the communication unit 100 and at least one second electronic unit (not shown) via the transceiver 120. Based on this connection, the communication unit 100 is further configured to establish a communication between the at least one first electronic unit communicable via a first protocol and/or format and the at least one second electronic unit communicable via a second protocol and/or format via the converter 130.

The communication device 200 comprises a housing 210 arranged to at least partially accommodate the communication unit 100. The carrier substrate 110 may be attached to the housing 210 via at least one resilient element (not shown) for preventing damages to the carrier substrate 110 caused by (intentional or unintentional) shocks, impacts, or the like, of the communication device 200. The resilient element may e.g. be a shock absorber made of rubber.

The communication device 200 further comprises a cap 220 attached to the housing 210. The cap 220, which in Fig. 1 is schematically shown in the form of a hat or helmet, is arranged to at least partially cover the housing 210.

Furthermore, the communication device 200 comprises a threaded connection 225 for connecting a first (upper) portion of the communication device 200 with a second (lower) portion of the communication device 200.

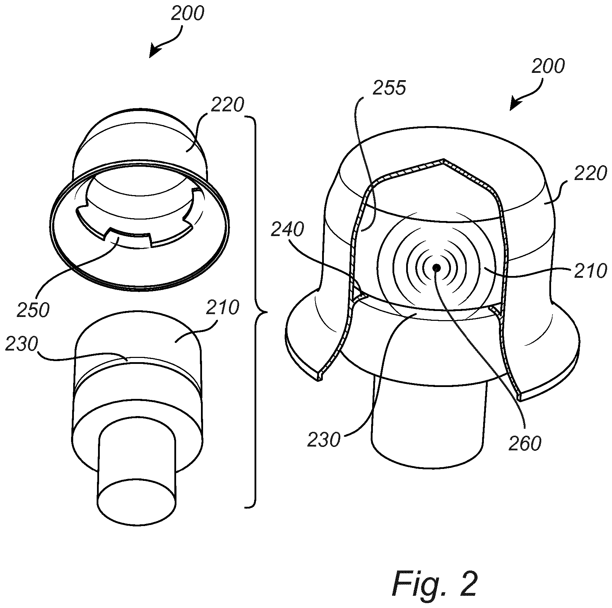

Fig. 2 diagrammatically illustrates the communication device 200 according to Fig. 1 which further comprises the cap 220 attached to the housing 210. The cap 220 may have substantially any form, and different caps 220 may furthermore be made of different materials (e.g. plastic) dependent on the environment which the communication device 200 is intended for. The caps 220 may also have different colors such that they are easily identified in case two or more communication devices 200 are provided in a communication system.

The cap 220 may be attached to the housing 210 via at least one snap connection. The snap connection of the communication device 200 as exemplified has an annual groove 230 in the housing 210 and an annual flange 240 in the cap 220, but it will be appreciated that the opposite relationship is also feasible. The annual flange 240 is configured to project into the annual groove 230. It will be appreciated that the cap 220 may be mounted to the housing 210 by a simple push, whereby the flange 240 becomes attached to the groove 230. The cap 220 may be rotated on the housing 210, and hereby impedes (intentional or unintentional) attempts of unscrewing and/or removing the communication unit 220. The annual flange 240 may furthermore comprise a plurality of tabs 250, and the fixation of the cap 220 to the housing 210 may be made with the aid of a tool. Moreover, the cap 220 of the communication device 200 may be configured to provide an air gap 255 between the cap 220 and the housing 210 for isolation purposes. It will be appreciated that the provision of the air gap 255 may be particularly advantageous in case the communication device 200 is arranged in a warm and/or sun-exposed environment.

The communication device 200 of Fig. 2 may further comprise at least one sensor 260 arranged in the housing 210, wherein the sensor 260 is configured to detect damage to the housing 210 and/or cap 220. For example, the sensor 260 may be a light-sensitive sensor comprising at least one photo-diode. In case the housing 210 and/or cap 220 is damaged (e.g. cracked), the light-sensitive sensor may detect a light intensity due to sunlight and/or artificial light entering the housing 210. For example, if the light-sensitive sensor registers a light-intensity above a predetermined threshold, it may alert an operator that the communication device 200 has been damaged.

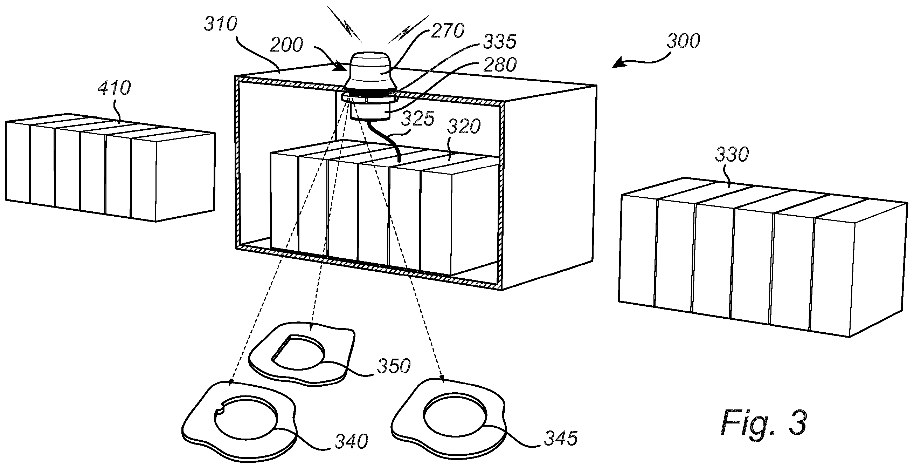

Fig. 3 diagrammatically illustrates a communication system 300 according to an embodiment of the present invention. The communication system 300 comprises a cabinet 310 and at least one first electronic unit 320 communicable via a first protocol arranged in the cabinet 310. The communication system 300 further comprises at least one second electronic unit 330 communicable via a second protocol arranged outside the cabinet 310. Furthermore, the communication system 300 comprises a communication device 200 as previously described for establishing a connection between the first and second electronic units 320, 330 and for establishing a communication between the first and second electronic units 320, 330 based on the connection. The communication device 200 and the first electronic unit 320 are connected by an electrical interface 325, comprising one or more wires. As an alternative, the connection may be wireless. The communication device 200 may convert the wired communication format and/or protocol of the first electronic unit 320 to a wireless communication format and/or protocol of the second electronic unit 330, or vice versa, for establishing communication between the first and second electronic units 320, 330. The communication unit 200 may furthermore convert a wireless, first protocol communication format of at least one (third) electronic unit 410 to a wireless, second protocol communication format of at least one (second) electronic unit 330, for establishing communication between the second and third electronic units 330, 410. Hence, the communication unit 200 may act as a wireless access point between the at least one (third) electronic unit 410 and the at least one (second) electronic unit 330. Furthermore, the communication unit 200 may act as a protocol converter between one or more of the at least one (first) electronic unit 320, the at least one (second) electronic unit 330 and the at least one (third) electronic unit 410.

The cabinet 310 comprises a hole 335 in which the communication device 200 is arranged. The hole 335 may for example be completely round, as exemplified by a hole 345. A first (upper) portion 270 of the communication device 200 is connected to a second (lower) portion 280 of the communication device 200 via a threaded connection such that projecting flanges of the first and second portions 270, 280 are arranged to clamp the edge of the hole 335 of the wall of the cabinet 310. The communication device 200 has a relatively large diameter which results in a distribution of pressure to the edges of the communication device 200. Furthermore, the material of the flanges of the first and second portions 270, 280 of the communication device 200 are relatively thick, which contributes to an increased strength and robustness of the communication device 200. Moreover, the nut of the communication device 200 may be relatively large, which even further facilitates the mounting of the communication device 200.

The communication device 200 may comprise a resilient seal member (not shown) for providing a sealing between the communication device 200 and the cabinet 310. The resilient seal member, which may be a rubber bushing or the like, may provide IP 65 sealing between the first portion 270 of the communication device 200 from the outside environment. The second portion 280 of the communication device 200 may be sealed from the interior of the cabinet 310 fulfilling IP 20 sealing.

The hole 335 may furthermore be configured to receive the communication device 200 in a unique orientation of the communication device 200. For example, the hole 335 may take on one or more asymmetric shapes, such as a hole with a cut out or recess 340 or a hole with a flat portion 350. The communication device 200 may be shaped accordingly, such that its form fit in the hole 335 leads to a unique orientation of the communication device 200.

In Fig. 3, the transceiver of the communication unit 200 protrudes (projects) from the wall into the exterior of the cabinet 310 for establishing a connection with the second electronic unit 330 arranged outside the cabinet 310. It will be appreciated that the communication between the transceiver and the second electronic unit 330 may be performed over networks such as 3G, WLAN, Bluetooth, etc. Due to this advantageous positioning of the transceiver/antenna of the communication unit 200 when the latter is arranged in the cabinet 310, an impaired transmission pattern and/or directivity of the transceiver/antenna is mitigated. It will be appreciated that the arrangement disclosed is particularly advantageous in the case the material of the cabinet 310 is metal.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A communication system (300), comprising
a cabinet (310);
at least one first electronic unit (320) communicable via a first communication protocol and arranged within said cabinet;
at least one second electronic unit (330) communicable via a second communication protocol and arranged outside said cabinet; and
a communication device (200), comprising
a communication unit (100), comprising
a carrier substrate (110),
at least one transceiver (120) comprising at least one antenna,
wherein said at least one transceiver is arranged on a carrier substrate, and
at least one converter (130) arranged to convert between different communication protocols,
wherein said communication unit is configured to establish a connection between said communication unit and at least one first electronic unit, and between said communication unit and at least one second electronic unit via said at least one transceiver,
and wherein said communication unit, based on said connection, is further configured to establish a communication between at least one first electronic unit communicable via a first communication protocol and at least one second electronic unit communicable via a second communication protocol via said at least one converter,
wherein said communication device is configured for arrangement at least partially within a wall of the cabinet, and wherein at least one of said at least one transceiver is configured to protrude from the wall into the exterior of the cabinet for establishing a connection with said at least one second electronic unit arranged outside said cabinet,
and wherein said communication device further comprises
a housing (210) arranged to at least partially accommodate said communication unit, and
a cap (220) attached to said housing with the aid of a tool and arranged to at least partially cover said housing protruding from the wall into the exterior of the cabinet, whereby the cap contributes to the tamper resistance as well as the anti-theft protection of the communication device,
wherein said housing and said cap comprise reciprocal snap connection elements in the form of at least one annual groove (230) and at least one annual flange (240) configured to project into said at least one annual groove.

2. The communication system according to claim 1, wherein said at least one converter is arranged to convert between wired and wireless communications, and wherein said communication unit, based on said connection, is further configured to establish a communication between at least one first electronic unit communicable via at least one wired connection and at least one second electronic unit communicable via at least one wireless connection via said at least one converter.

3. The communication system according to claims 1 or 2, further comprising
at least one electrical interface (140),
wherein said communication unit is configured to establish a connection between said communication unit and at least one first electronic unit via said at least one electrical interface, and between said communication unit and at least one second electronic unit via said at least one transceiver, respectively.

4. The communication system according to any one of the preceding claims, wherein said carrier substrate is arranged in parallel with a longitudinal axis (A) of said communication unit, and wherein said at least one antenna is arranged on an end portion of said carrier substrate.

5. The communication system according to any one of the preceding claims, wherein said carrier substrate is attached to said housing via at least one resilient element.

6. The communication system as claimed in any one of the preceding claims, wherein said cap is configured to provide an air gap (255) between said cap and said housing.

7. The communication system as claimed in any one of the preceding claims, further comprising at least one sensor (260) arranged in said housing, wherein said at least one sensor is configured to detect damage to said housing.

8. The communication system as claimed in claim 7, wherein said at least one sensor is a light-sensitive sensor comprising at least one photodiode.

9. The communication system according to any one of the preceding claims, wherein said cap comprises at least one resilient seal member configured to provide a sealing between said cap and the cabinet.

10. The communication system according to any one of the preceding claims, further comprising
a hole (335) in a wall of said cabinet, wherein said hole is configured to receive said communication device in a unique orientation of said communication device.

11. A method for establishing a communication between electronic units communicable via different communication protocols, comprising
providing at least one first electronic unit communicable via a first communication protocol and at least one second electronic unit communicable via a second communication protocol;
providing a communication system according to any one of the preceding claims;
establishing a connection between said communication unit and said at least one first electronic unit and between said communication unit and said at least one second electronic unit, respectively; and
establishing a communication between said at least one first electronic unit and said at least one second electronic unit based on said connection.

## Patentansprüche

1. Kommunikationssystem (300), Folgendes umfassend
einen Schrank (310);
mindestens eine erste elektronische Einheit (320), welche über ein erstes Kommunikationsprotokoll kommunikationsfähig ist und innerhalb des Schranks angeordnet ist;
mindestens eine zweite elektronische Einheit (330), welche über ein zweites Kommunikationsprotokoll kommunikationsfähig ist und außerhalb des Schranks angeordnet ist; und
eine Kommunikationsvorrichtung (200), Folgendes umfassend
eine Kommunikationseinheit (100), Folgendes umfassend
ein Trägersubstrat (110);
mindestens einen Sendeempfänger (120), welcher mindestens eine Antenne umfasst,
wobei der mindestens eine Sendeempfänger auf einem Trägersubstrat angeordnet ist und
mindestens einen Konverter (130), welcher angeordnet ist, um zwischen verschiedenen Kommunikationsprotokollen zu konvertieren,
wobei die Kommunikationseinheit eingerichtet ist, um über den mindestens einen Sendeempfänger eine Verbindung zwischen der Kommunikationseinheit und mindestens einer ersten elektronischen Einheit sowie zwischen der Kommunikationseinheit und mindestens einer zweiten elektronischen Einheit herzustellen,
und wobei die Kommunikationseinheit auf der Grundlage der Verbindung weiterhin eingerichtet ist, um über den mindestens einen Konverter eine Kommunikation zwischen mindestens einer ersten elektronischen Einheit, welche über ein erstes
Kommunikationsprotokoll kommunikationsfähig ist, und mindestens einer zweiten elektronischen Einheit herzustellen, welche über ein zweites Kommunikationsprotokoll kommunikationsfähig ist,
wobei die Kommunikationsvorrichtung zur mindestens teilweisen Anordnung innerhalb einer Wand des Schranks eingerichtet ist, und
wobei mindestens einer des mindestens einen Sendeempfängers eingerichtet ist, um aus der Wand in das Äußere des Schranks vorzustehen, um eine Verbindung mit der mindestens einen zweiten elektronischen Einheit herzustellen, welche außerhalb des Schranks angeordnet ist,
und wobei die Kommunikationsvorrichtung weiterhin Folgendes umfasst
ein Gehäuse (210), welches angeordnet ist, um die Kommunikationseinheit mindestens teilweise zu beherbergen, und
eine Kappe (220), welche mit der Hilfe eines Werkzeugs an dem Gehäuse befestigt ist und angeordnet ist, um das Gehäuse, welches aus der Wand in das Äußere des Schranks vorsteht, mindestens teilweise abzudecken, wodurch die Kappe zum Manipulationsschutz sowie zur Diebstahlsicherung der Kommunikationsvorrichtung beiträgt,
wobei das Gehäuse und die Kappe einander entsprechende Einrastverbindungselemente in der Gestalt mindestens einer ringförmigen Nut (230) und mindestens eines ringförmigen Kragens (240) umfassen, welcher eingerichtet ist, um in die mindestens eine ringförmige Nut vorzustehen.

2. Kommunikationssystem nach Anspruch 1, wobei der mindestens eine Konverter angeordnet ist, um zwischen drahtgestützter und drahtloser Kommunikation zu konvertieren und wobei die Kommunikationseinheit auf der Grundlage der Verbindung weiterhin eingerichtet ist, um über den mindestens einen Konverter eine Kommunikation zwischen mindestens einer ersten elektronischen Einheit, welche über mindestens eine drahtgestützte Verbindung kommunikationsfähig ist, und mindestens einer zweiten elektronischen Einheit herzustellen, welche über mindestens eine drahtlose Verbindung kommunikationsfähig ist.

3. Kommunikationssystem nach Anspruch 1 oder 2, weiterhin Folgendes umfassend
mindestens eine elektrische Schnittstelle (140),
wobei die Kommunikationseinheit eingerichtet ist, um über die mindestens eine elektrische Schnittstelle eine Verbindung zwischen der Kommunikationseinheit und mindestens einer ersten elektronischen Einheit bzw. über den mindestens einen Sendeempfänger zwischen der Kommunikationseinheit und mindestens einer zweiten elektronischen Einheit herzustellen.

4. Kommunikationssystem nach einem der vorhergehenden Ansprüche, wobei das Trägersubstrat parallel zu einer Längsachse (A) der Kommunikationseinheit angeordnet ist und wobei die mindestens eine Antenne auf einem Endabschnitt des Trägersubstrats angeordnet ist.

5. Kommunikationssystem nach einem der vorhergehenden Ansprüche, wobei das Trägersubstrat über mindestens ein elastisches Element an dem Gehäuse befestigt ist.

6. Kommunikationssystem nach einem der vorhergehenden Ansprüche, wobei die Kappe eingerichtet ist, um einen Luftspalt (255) zwischen der Kappe und dem Gehäuse bereitzustellen.

7. Kommunikationssystem nach einem der vorhergehenden Ansprüche, weiterhin mindestens einen Sensor (260) umfassend, welcher in dem Gehäuse angeordnet ist, wobei der mindestens eine Sensor eingerichtet ist, um eine Beschädigung an dem Gehäuse zu detektieren.

8. Kommunikationssystem nach Anspruch 7, wobei der mindestens eine Sensor ein lichtempfindlicher Sensor ist, welcher mindestens eine Fotodiode umfasst.

9. Kommunikationssystem nach einem der vorhergehenden Ansprüche, wobei die Kappe mindestens ein elastisches Dichtungsglied umfasst, welches eingerichtet ist, um eine Dichtung zwischen der Kappe und dem Schrank bereitzustellen.

10. Kommunikationssystem nach einem der vorhergehenden Ansprüche, weiterhin Folgendes umfassend
eine Öffnung (335) in einer Wand des Schranks, wobei die Öffnung eingerichtet ist, um die Kommunikationsvorrichtung in einer eindeutigen Orientierung der Kommunikationsvorrichtung aufzunehmen.

11. Verfahren zum Herstellen einer Kommunikation zwischen elektronischen Einheiten, welche über verschiedene Kommunikationsprotokolle kommunikationsfähig sind, Folgendes umfassend
Bereitstellen mindestens einer ersten elektronischen Einheit, welche über ein erstes Kommunikationsprotokoll kommunikationsfähig ist, und mindestens einer zweiten elektronischen Einheit, welche über ein zweites Kommunikationsprotokoll kommunikationsfähig ist;
Bereitstellen eines Kommunikationssystems nach einem der vorhergehenden Ansprüche;
Herstellen einer Verbindung zwischen der Kommunikationseinheit und der mindestens einen ersten elektronischen Einheit bzw. zwischen der Kommunikationseinheit und der mindestens einen zweiten elektronischen Einheit; und
Herstellen einer Kommunikation zwischen der mindestens einen ersten elektronischen Einheit und der mindestens einen zweiten elektronischen Einheit auf der Grundlage der Verbindung.

## Revendications

1. Système de communication (300), comprenant
une armoire (310) ;
au moins une première unité électronique (320) communicante via un premier protocole de communication et agencée à l'intérieur de ladite armoire ;
au moins une deuxième unité électronique (330) communicante via un deuxième protocole de communication et agencée à l'extérieur de ladite armoire ; et
un dispositif de communication (200), comprenant une unité de communication (100), comprenant
un substrat porteur (110),
au moins un émetteur-récepteur (120) comprenant au moins une antenne, dans lequel ledit au moins un émetteur-récepteur est agencé sur un substrat porteur, et
au moins un convertisseur (130) agencé pour convertir entre des protocoles de communication différents dans lesquels ladite unité de communication est configurée pour établir une connexion entre ladite unité de communication et au moins une première unité électronique, et entre ladite unité de communication et au moins une deuxième unité électronique via ledit au moins un émetteur-récepteur
et dans lequel ladite unité de communication, basée sur ladite connexion, est en outre configurée pour établir une communication entre au moins une première unité électronique communicante via un premier protocole de communication et au moins une deuxième unité électronique communicante via un deuxième protocole de communication via ledit au moins un convertisseur,
dans lequel ledit dispositif de communication est configuré pour être disposé au moins partiellement dans une paroi de l'armoire, et dans lequel au moins un desdits au moins un émetteur-récepteur est configuré pour dépasser en saillie depuis la paroi vers l'extérieur de l'armoire pour établir une connexion avec ladite au moins une deuxième unité électronique agencée à l'extérieur de ladite armoire,
et dans lequel ledit dispositif de communication comprend en outre un boîtier (210) agencé pour renfermer au moins partiellement ladite unité de communication, et
un capuchon (220) fixé audit boîtier à l'aide d'un outil et agencé pour recouvrir au moins partiellement ledit boîtier dépassant du mur à l'extérieur de l'armoire, moyennant quoi le capuchon contribue ainsi à la résistance à l'effraction ainsi qu'à la protection antivol de l'appareil de communication,
dans lequel ledit boîtier et ledit capuchon comprennent des éléments de raccordement à encliquetage réciproque sous la forme d'au moins une rainure annulaire (230) et d'au moins une collerette annulaire (240) configurée pour dépasser en saillie dans ladite au moins une rainure annulaire.

2. Système de communication selon la revendication 1, dans lequel ledit au moins un convertisseur est agencé pour convertir entre des communications filaires et sans fil, et dans lequel ladite unité de communication, basée sur ladite connexion, est en outre configurée pour établir une communication entre au moins une première unité électronique communicante via au moins une connexion filaire et au moins une deuxième unité électronique communicante via au moins une connexion sans fil via ledit au moins un convertisseur.

3. Système de communication selon les revendications 1 ou 2, comprenant en outre
au moins une interface électrique (140),
dans lequel ladite unité de communication est configurée pour établir une connexion entre ladite unité de communication et au moins une première unité électronique via ladite au moins une interface électrique, et entre ladite unité de communication et au moins une deuxième unité électronique via ledit au moins un émetteur-récepteur, respectivement.

4. Système de communication selon une quelconque des revendications précédentes, dans lequel ledit substrat porteur est disposé parallèlement à un axe longitudinal (A) de ladite unité de communication, et dans lequel ladite au moins une antenne est disposée sur une partie d'extrémité dudit substrat porteur.

5. Système de communication selon une quelconque des revendications précédentes, dans lequel ledit substrat porteur est fixé audit boîtier via au moins un élément élastique.

6. Système de communication selon une quelconque des revendications précédentes, dans lequel ledit capuchon est configuré pour fournir un espace d'air (255) entre ledit capuchon et ledit boîtier.

7. Système de communication selon une quelconque des revendications précédentes, comprenant en outre au moins un capteur (260) agencé dans ledit boîtier, dans lequel ledit au moins un capteur est configuré pour détecter des dommages audit boîtier.

8. Système de communication selon la revendication 7, **caractérisé en ce que** ledit au moins un capteur est un capteur photosensible comprenant au moins une photodiode.

9. Système de communication selon une quelconque des revendications précédentes, dans lequel ledit capuchon comprend au moins un élément d'étanchéité élastique configuré pour fournir une étanchéité entre ledit capuchon et l'armoire.

10. Système de communication selon une quelconque des revendications précédentes, comprenant en outre
un orifice (335) dans une paroi de ladite armoire, dans lequel ledit orifice est configuré pour recevoir ledit dispositif de communication dans une orientation unique dudit dispositif de communication.

11. Procédé pour établir une communication entre des unités communicantes via différents protocoles de communication, comprenant de
fournir au moins une première unité électronique communicante via un premier protocole de communication et au moins une deuxième unité électronique communicante via un deuxième protocole de communication ;
fournir un système de communication selon une quelconque des revendications précédentes ;
établir une connexion entre ladite unité de communication et ladite au moins une première unité électronique et entre ladite unité de communication et ladite au moins une deuxième unité électronique, respectivement ; et
établir une communication entre ladite au moins une première unité électronique et ladite au moins une deuxième unité électronique basée sur ladite connexion.
